# FASCICULE DE BREVET EUROPEEN

(11) **EP 2 142 614 B1**
(45) Date de publication et mention de la délivrance du brevet: **27.05.2020**
(21) Numéro de dépôt: 08735838.8
(22) Date de dépôt: 04.04.2008
(51) Int. Cl.: C09J 4/06, C09J 153/02, C09J 109/00, C09J 111/00, C09J 123/20, C09J 123/28, C09J 133/12, C09J 5/00, C08F 290/04

(54) **COMPOSITION POUR ADHESIF STRUCTURAL**
ZUSAMMENSETZUNG FÜR MONTAGEKLEBSTOFF
COMPOSITION FOR STRUCTURAL ADHESIVE

(30) Priorité: 05.04.2007 FR 0702485; 26.07.2007 FR 0705492
(43) Date de publication de la demande: 13.01.2010
(73) Titulaire: Jacret, 95500 Le Thillay (FR)
(72) Inventeur: CURET, Arnaud, F-60300 Fontaine Chaalis (FR); DAVID, Régis, F-92370 Chaville (FR)
(74) Mandataire: Flesselles, Bruno F.G.
(86) Numéro de dépôt international: PCT/EP2008/054097
(87) Numéro de publication internationale: WO 2008/125521

(56) Documents cités:
- EP-A1- 1 431 365

## Description

La présente invention se rapporte au domaine des adhésifs structuraux acryliques (à base d'acrylate ou de méthacrylate) et à leurs applications.

Les adhésifs structuraux sont une bonne alternative aux autres techniques mécaniques pour lier entre eux deux matériaux, tels les métaux ou les plastiques. En effet, la répartition de force est meilleure par collage que lorsque l'on utilise des techniques alternatives telles que le rivetage ou la soudure. De plus, l'utilisation du collage permet souvent de travailler plus rapidement, et présente également l'avantage de proposer une meilleure isolation contre des éléments externes (poussière, humidité) que les technologies mécaniques.

Les adhésifs structuraux sont ainsi utilisés dans de nombreux domaines industriels, même s'ils présentent certains désavantages. De fait, le lien créé lors de la polymérisation de l'adhésif (prise) est souvent rigide lorsqu'une bonne résistance mécanique est nécessaire. Ainsi, si l'élasticité de l'adhésif est insuffisante, une rupture peut être constatée lorsque les deux pièces liées l'une à l'autres sont amenées à subir des forces les éloignant l'une de l'autre. Il existe des adhésifs présentant une bonne élasticité, mais ils ont souvent une faible résistance mécanique.

Il est donc nécessaire d'identifier des adhésifs structuraux présentant à la fois une bonne résistance mécanique (notamment une résistance au cisaillement) et une élasticité satisfaisante. Par ailleurs, il est important que ces qualités soient observées sur différents types de matériaux, et notamment sur le métal et sur les matériaux composites. Enfin, il est important que ces adhésifs présentent une viscosité importante, afin de pouvoir être appliqués sur de grandes longueurs sur des surfaces verticales ou surplombantes sans glisser ou couler avant l'application de la seconde surface à faire adhérer. Ce phénomène est particulièrement ennuyeux quand un long temps de travail est nécessaire.

Ce phénomène de glissement réduit par exemple l'utilisation d'adhésifs à base acrylique pour les applications d'adhésion de longs objets sur des panneaux. Le fait d'essayer d'utiliser ces adhésifs peut augmenter le temps de construction, ou compliquer le procédé de fabrication.

La mise au point d'adhésifs permettant une telle utilisation permettrait de simplifier les procédés demandant une adhésion de deux grandes surfaces, de varier les matériaux de construction et d'accélérer ces procédés.

La présente invention se propose de résoudre les problèmes énoncés ci-dessus en fournissant une composition adhésive utilisable dans un adhésif structural présentant un allongement à la rupture supérieur ou égal à 80 %, ainsi qu'une résistance au cisaillement par traction supérieure ou égale à 10 MPa sur aluminium. De plus, les adhésifs selon l'invention possèdent une rhéologie telle qu'il est possible d'appliquer une épaisseur d'au moins 3 à 5 mm, de préférence d'au moins 6 à 8 mm, des adhésifs selon l'invention sur une surface verticale métallique lisse sans qu'elle ne coule sous l'effet de la gravité, avant la fin de la polymérisation.

Les adhésifs selon l'invention sont constitués d'une composition selon l'invention et d'un second composant contenant un initiateur de polymérisation (catalyseur). La composition selon l'invention est mélangée avec le second composant sur la surface verticale et l'on observe l'épaisseur maximale pour laquelle la gravité ne fait pas s'effondrer l'adhésif avant polymérisation.

D'une façon générale, la présente invention permet d'ajuster la rhéologie d'adhésifs structuraux, en maintenant un allongement de 80 % minimum.

Les adhésifs structuraux sont composés de deux éléments à savoir un élément catalyseur servant à mettre en œuvre la polymérisation de l'autre élément qui contient des monomères.

L'invention se rapporte ainsi à une composition utilisable dans un adhésif structural, comprenant :
(a) au moins un monomère méthacrylate
(b) au moins un copolymère bloc élastomérique contenant du styrène et au moins un second monomère
(c) au moins un élastomère choisi parmi le polybutadière, le polyisoprène et le polychloroprène,
(d) des particules formées d'une coquille thermoplastique et d'un cœur élastomérique.

Des modes de réalisation de la composition sont définis dans les revendications 2 à 15.

Une utilisation est définie dans les revendications 16 et 17.

La composition selon l'invention est ainsi utilisée avec un catalyseur de polymérisation.

De préférence, le copolymère bloc (b) est choisi parmi un copolymère bloc contenant du styrène et de l'isoprène, un copolymère bloc élastomérique contenant du styrène et du butadiène ou de l'éthylène, et les mélanges de ceux-ci.

EP 1431365 décrit un mélange entre un monomère ester méthacrylate, un ou plusieurs élastomères, et des particules formées d'une coquille thermoplastique et d'un coeur élastomérique. Bien que le styrène-butadiène-styrène (SBS), ou des polychloroprènes soient cités dans EP 1431365, ils le sont parmi d'autres types d'élastomères. De fait, EP 1431365 ne décrit pas de compositions contenant les quatre éléments et notamment spécifiquement les éléments (b) et (c) de la composition revendiquée dans la présente demande, ni les avantages apportés par cette composition.

Dans un mode de réalisation préféré, le monomère ester (a) est un monomère méthacrylate. On choisit de préférence un monomère méthacrylate dans lequel la partie alcool présente une chaîne linéaire courte (c'est-à-dire ayant un ou deux atomes de carbones). Ainsi, les monomères préférés selon l'invention sont le méthacrylate de méthyle et le méthacrylate d'éthyle.

Dans un autre mode de réalisation, la partie alcool présente au moins un cycle, qui peut être substitué ou non. Ainsi, dans ce mode de réalisation, les monomères peuvent notamment être choisis parmi le méthacrylate de tétrahydrofurfuryle, le méthacrylate de phénoxyéthyle, le méthacrylate d'isobornyle, le méthacrylate de glycidylether, le méthacrylate de benzyle, le méthacrylate de cyclohexyle, le méthacrylate de triméthylcyclohéxyle.

Des mélanges de ces esters peuvent également être utilisés. Le pourcentage en poids de méthacrylate dans la composition est préférentiellement compris entre 20 et 80 %, de façon plus préférée entre 30 à 65 %, de façon encore plus préférée de 42 à 58 % soit environ autour de 50 %.

Dans un mode de réalisation particulier, la composition contient également au moins un monomère ester acrylique (e) dans lequel la partie alcool présente une chaîne linéaire d'au moins 6 atomes de carbones (à chaîne longue). Ainsi, on utilise préférentiellement du méthacrylate de lauryle, du méthacrylate de 2-éthylhexyle, de l'acrylate de 2-éthylhexyle, des esters à base de polyéthylène-glycol, ou des mélanges de ces esters. Il est préférable que la composition contienne moins de 10 %, de façon plus préférée au plus 8%, voire au plus 5% en poids au total de ces monomères acrylates à chaîne longue. Dans un mode de réalisation particulier, la composition comprend un mélange de deux monomères esters acryliques à chaîne longue. De façon préférée, lorsque la composition ne contient qu'un seul monomère ester acrylique (e), il est préféré qu'il soit présent à une quantité inférieure ou égale à 8 % en poids, alors qu'il est acceptable qu'il y en ait à une quantité comprise entre 8 et 10 % lorsque la composition contient un mélange de ces esters (e). Dans ce cas, on préfère que chacun soit au plus présent à 5 %.

La composition peut également contenir d'autres monomères tels que l'acrylonitrile, le méthacrylonitrile, ou le styrène.

La composition selon l'invention comprend également un ou plusieurs différents copolymères bloc. Ainsi, elle peut contenir un copolymère bloc styrène - isoprène - styrène (SIS), un copolymère bloc contenant du styrène et du butadiène ou de l'éthylène, ou des mélanges de ceux-ci.

Lorsque la composition contient un copolymère bloc contenant du styrène et du butadiène, il peut être un copolymère styrène - butadiène - styrène (SBS) ou un copolymère styrène - isoprène - butadiène - styrène (SIBS) tel le Kraton MD6455 (entreprise Kraton Polymers) décrit par Dr. Donn DuBois et al., au congrès Adhesives & Sealants Council Meeting, Louisville, KY, 9-12 octobre 2005.

Lorsque la composition contient un copolymère bloc contenant du styrène et de l'éthylène, il peut être un SEBS (copolymère styrène-éthylène/butylène-styrène) ou un SEPS (copolymère styrène-éthylène/propylène-styrène). Ces composés sont disponibles dans la gamme Kraton G (Kraton Polymers).

De manière préférée, le styrène est présent dans une proportion comprise entre 15 et 50 %, de façon plus préférée entre 22 et 40 %, de façon encore plus préférée environ 28-33 % en poids du copolymère SBS. Il est présent dans une proportion comprise entre 12 et 24 %, de manière plus préférée à environ 18-19 % en poids dans les copolymères SIS ou SIBS.

Lorsque la composition contient un mélange de deux copolymères blocs (par exemple un SIS et un SIBS), la proportion relative SIS / SIBS varie de préférence dans un rapport de 4 : 1 (en poids dans la composition) à 1,5 : 1. La proportion préférée de SIS par rapport au second copolymère bloc est d'environ 3 : 1 ou 3,3 : 1. On peut toutefois également utiliser un mélange de SIS et de SBS dans les mêmes proportions relatives que le mélange SIS / SIBS. On peut également utiliser un mélange de SIS, SIBS et SBS. On peut également rajouter un autre copolymère bloc à l'un de ces mélanges.

Les copolymères blocs SIS, SBS ou SIBS utilisables selon l'invention sont bien connus de l'homme du métier. Ils sont notamment produits par l'entreprise Kraton Polymers (Houston, Texas, USA). Ainsi, on peut utiliser le SIS Kraton D1160 décrit dans US 20050238603 ou le Kraton D1161, le SBS Kraton D1102 décrit dans US 5,106,917 et le SIBS Kraton MD6455 ou Kraton MD 6460.

L'homme du métier sait sélectionner d'autres copolymères blocs SIS, SIBS, SBS utilisables dans la composition selon l'invention, parmi ceux existants, en fonction notamment de leur facilité de dissolution dans les monomères utilisés, ou de leur résistance mécanique en traction.

De préférence, la composition selon l'invention comprend entre 5 et 30 % en poids, de préférence entre 12 et 25 %, de façon plus préférée entre 15 et 25 %, du ou des copolymère(s) bloc élastomérique(s).

Dans un mode de réalisation particulier, la composition selon l'invention contient un copolymère bloc élastomérique contenant du styrène et de l'isoprène et au moins un copolymère bloc élastomérique contenant du styrène et du butadiène, soit un mélange SIS / SIBS, un mélange SIS / SBS, ou un mélange SIS / SIBS / SBS.

Dans un autre mode de réalisation, la composition selon l'invention contient un seul copolymère bloc élastomérique, contenant du styrène et de l'isoprène, soit un SIS.

Dans un autre mode de réalisation, la composition selon l'invention contient un seul copolymère bloc élastomérique, contenant du styrène et du butadiène, choisi parmi un SIBS ou un SBS.

La composition selon l'invention contient également au moins un élastomère choisi de telle sorte qu'il soit compatible en solution avec le ou les copolymères blocs utilisés. Si besoin est, il est fonctionnalisé (présentant une double liaison à ses extrémités, en particulier des fonctions méthacrylate pour améliorer les liaisons avec les monomères). De préférence, on choisit un élastomère liquide. On utilise de préférence au moins un élastomère fonctionnalisé, seul ou en mélange avec au moins un élastomère non-fonctionnalisé. Il est choisi parmi le polybutadière, le polyisoprène et le polychloroprène.

En particulier, il est choisi de telle sorte que son paramètre de solubilité d'Hildebrand soit compatible avec les paramètres de solubilité d'Hildebrand des copolymères blocs utilisés. Le paramètre de solubilité d'Hildebrand est bien connu et se calcule par la racine carrée de la densité d'énergie cohésive du composé. En particulier, le paramètre de solubilité d'Hildebrand de l'élastomère est compris entre 8 et 9. On utilise ainsi des élastomères de type polybutadiène (que l'on choisit alors préférentiellement liquide et fonctionnalisé, par exemple à terminaison vinylique, contenant un group ester, tel le polybutadiène Hycar VTB 2000x168 de Emerald Performance Materials (EPM) (Cuyahoga Falls, Ohio, USA), ou le Ricacryl 3801 de Sartomer), ou polyisoprène. On peut également utiliser du polychloroprène (Neoprène AD10, DuPont, USA). Ces élastomères peuvent être utilisés seuls, ou en tant que mélanges (on peut ainsi notamment utiliser un mélange de polybutadiène fonctionnalisé et de polychloroprène, ou un mélange de polybutadiène fonctionnalisé et de polybutadiène non-fonctionnalisé tel le Hycar CTB 2000x162 (EPM)).

Cet élément (c) est favorablement présent à une quantité comprise entre 4 et 20 %, de préférence entre 6 et 15 % en poids dans la composition selon l'invention, de façon plus préférée entre environ 8 et 12 %.

Les proportions relatives du mélange copolymères blocs et de l'élastomère sont comprises entre 4 : 1 et 0,5 : 1 en poids dans la composition, de préférence d'environ 2 : 1. Toutefois, on peut également avoir des proportions relatives de l'ordre d'environ 0,5 : 1.

La composition selon l'invention contient également des particules polymériques élastomériques. Ces particules sont appelées « core-shell » en anglais, sont bien connues de l'homme du métier, et sont formées d'une coquille thermoplastique « dure », préférentiellement à base de polyméthacrylate de méthyle (PMMA), et d'un cœur élastomérique généralement à base de butadiène, souvent copolymérisé avec du styrène, ou à base acrylique. On peut notamment citer, dans la mise en œuvre de l'invention, les polymères acrylonitrile-butadiène-styrène (ABS), méthacrylate-butadiène-styrène (MBS), méthacrylate-acrylonitrile-butadiène-styrène (MABS) et les mélanges de ceux-ci.

Ces particules contiennent un cœur élastomérique réticulé, entouré d'une coquille thermoplastique, souvent un polymère de méthacrylate de méthyle (PMMA). Les brevets US 3,985,703, US 4,304,709, US 6,433,091, EP 1256615 ou US 6,869,497 décrivent notamment de telles particules, qui sont ainsi bien connues de l'homme du métier.

On préfère notamment des particules modificatrices d'impact, et en particulier les MBS modificateurs d'impact (MBS impact modifiers). Dans un mode de réalisation préféré, ces MBS présentent une faible réticulation du polymère formant le cœur. De plus, ces MBS, outre leur résistance à l'impact, présentent également de préférence une résistance au craquement induit par les chocs.

Les polymères core-shell sont disponibles auprès de multiples entreprises. On peut ainsi citer GE Plastics ou Arkema (Paris, France). Les particules préférées sont notamment de type Clearstrength C301, C303H, C223, C350, C351, E920 ou C859 d'Arkema, les MBS C301 et C303H étant préféré. On peut aussi utiliser le Durastrength D300 ou D340 d'Arkema, présentant un cœur acrylique entouré d'une enveloppe PMMA. De même, on peut également utiliser les MBS développés par Rohm et Haas (Philadelphie, PA, Etats-Unis), notamment le Paraloid™ BTA 753.

Ces particules peuvent être utilisées seules ou en mélange. Ainsi, dans un mode de réalisation particulier de l'invention, on utilise un mélange de particules MBS (en particulier les C303H, C301) et de particules présentant une enveloppe PMMA et un cœur acrylonitrile (notamment les particules D340).

De préférence, ces particules sont présentes dans la composition dans une quantité comprise entre 2 et 20 % en poids de la composition, de préférence entre 5 et 15 % en poids.

La composition selon l'invention peut également contenir un monomère acide tel qu'un monomère acide polymérisable par radicaux libres connu dans l'art du type acide carboxylique insaturé, acide maléique, acide crotonique, acide isophtalique, acide fumarique. On peut également ajouter de l'isobornyl acrylate (IBXA), du 2-hydroxy-éthyl-méthacrylate (HEMA), du 2-hydroxypropyl-méthacrylate (HPMA), du 2-(perfluorooctyl)éthyl acrylate (POA), du tétrahydrofurfuryl acrylate (THFA), de l'isobutoxyméthylacrylamide (IBMA). On peut ajouter des mélanges de ces composés, notamment un mélange de HEMA et HPMA. On préfère l'acide méthacrylique ou l'acide acrylique. On ajoute entre 2 et 10 % de ce composé, de préférence entre 3 et 5 %.

Ainsi que vu plus haut, la composition selon l'invention peut également contenir d'autres élastomères tels un polychloroprène, tel que le Néoprène AD10 (Dupont, Etats-Unis).

La composition selon l'invention peut également contenir, dans ses modes de réalisations préférés, au moins un composé supplémentaire choisi parmi un accélérateur de polymérisation, un agent de rhéologie, un promoteur d'adhésion.

L'accélérateur de polymérisation sert à favoriser la polymérisation et le durcissement de l'adhésif lorsque l'on rajoute le catalyseur. Il s'agit d'une amine tertiaire, préférentiellement aromatique, telle que la diméthyl para-toluidine, et/ou le 2,2'-(p-tolylimino)diéthanol.

L'agent de rhéologie sert à améliorer une bonne viscosité de la composition selon l'invention, afin qu'elle puisse être aisément appliquée sur les surfaces à coller. On peut utiliser des polyamides telles que le Disparlon 6200 ou le Disparlon 6500 (Kusumoto Chemicals Ltd, Japon). Cet agent de rhéologie est typiquement utilisé dans une quantité ne dépassant pas 2 ou 3 % en poids de la composition.

Dans le cadre de la composition selon l'invention, on préfère que le promoteur d'adhésion à base d'ester de phosphate soit méthacrylé. En particulier, on utilise un promoteur d'adhésion à base d'ester de phosphate qui est l'ester phosphate 2-hydroxyéthyl de méthacrylate. Il peut notamment être obtenu sous le nom de Genorad 40 (Rahn AG, Zürich, Suisse). De tels promoteurs d'adhésion sont bien connus dans l'art, et sont notamment décrits dans US 4,223,115. On peut ainsi citer le 2-méthacryloyloxyethyl phosphate, le bis-(2-méthacryloyloxyethyl phosphate), le 2-acryloyloxyethyl phosphate, le bis-(2-acryloyloxyethyl phosphate), le méthyl-(2-méthacryloyloxyethyl phosphate), l'éthyl-(2-méthacryloyloxyethyl phosphate), un mélange d'esters mono and di-phosphate de 2-hydroxyéthyl de méthacrylate (notamment celui connu sous le nom de T-Mulz 1228 (Harcros Organics, Kansas City, US)) et les composés apparentés ou dérivés.

D'autres éléments tels que des charges minérales (TiO₂, CaCO₃, Al₂O₃, phosphate de zinc), des agents résistants aux ultraviolets (tels que la 2-hydroxyphenyltriazine, Tinuvin 400 de Ciba-Geigy), de la paraffine, des microbilles de verre peuvent également être ajoutés à la composition selon l'invention. Des inhibiteurs de polymérisation à radicaux libres tels que le BHT, ou des benzoquinones comme la naphtoquinone, l'hydroquinone ou l'éthylhydroquinone peuvent aussi être ajoutés pour augmenter la durée de vie de la composition.

Il est connu que les adhésifs structuraux sont formés de deux éléments qui sont une composition selon l'invention et un agent catalyseur permettant la polymérisation et la prise de l'adhésif. Ces deux éléments sont stockés dans deux compartiments différents et sont mélangés lors de l'application de l'adhésif. De tels adhésifs sont également objets de l'invention.

Cet agent catalyseur est un initiateur de polymérisation à radicaux libres, en particulier à base de peroxyde, et est bien connu dans l'art. On peut notamment choisir le peroxyde de benzoyle, le tertbutylperoxybenzoate, l'hydroperoxyde de cumène. On préfère lorsque l'agent catalyseur contient entre 5 et 40 % en poids de peroxyde, en particulier environ 20 % en poids de peroxyde. On utilise notamment une pâte contenant environ 20 % de peroxyde de benzoyle.

On utilise l'agent catalyseur dans un ratio de 1 : 1 à 1 : 30, de préférence de 1 : 5 à 1 : 30 de façon encore plus préférée environ 1 : 10 par rapport au second élément qui est la composition selon l'invention.

L'invention est donc basée sur le fait que l'utilisation combinée d'un monomère méthacrylate, d'un copolymère bloc élastomérique choisi parmi un copolymère bloc contenant du styrène et de l'isoprène, un copolymère bloc élastomérique contenant du styrène et du butadiène ou de l'éthylène, et les mélanges de ceux-ci, d'un élastomère liquide fonctionnalisé choisi parmi le polybutadière, le polyisoprène et le polychloroprène et de particules polymériques élastomériques à base de butadiène et styrène permet d'obtenir une composition pour un adhésif structural qui présente un allongement à la rupture supérieur ou égal à 80%, de façon plus préférée à 100 % et une résistance au cisaillement par traction supérieure ou égale à 10, 15, voire à 17 MPa (sur aluminium), ainsi qu'une viscosité importante. Cette résistance au cisaillement peut être ajustée par la quantité ajoutée de promoteurs d'adhésion ou de monomères acides, tels que mentionnés ci-dessus.

Ce résultat est totalement inattendu, car cet adhésif présente ainsi des propriétés bien supérieures à celles décrites dans l'art. Ainsi, le brevet US 6,433,091 suggère d'utiliser des polymères « core shell » dans des adhésifs structuraux et cite les MABS, MBS, et ABS. Toutefois, aucune des compositions décrites dans ce brevet ne comprend tous les éléments de la composition selon l'invention.

De même, EP 1256615 est silencieux sur la résistance au cisaillement des adhésifs décrits, la seule donnée étant bien inférieure aux propriétés des compositions selon l'invention.

Par ailleurs, cet adhésif présente également une excellente résistance mécanique lorsqu'il est utilisé sur un matériau composite. De fait, il est courant que les résistances mécaniques observées sur métal ne soient pas toujours répétées sur matériau composite.

L'utilisation d'une composition selon l'invention permet donc d'effectuer des collages de métaux, plastiques, matériaux composites sur du composite et trouve ainsi son application notamment dans le domaine de la construction de silos, de bateaux ou de remorques de camions. On peut également l'utiliser dans le domaine de la construction automobile, ou le domaine ferroviaire.

Ainsi, la composition permet l'adhésion d'un matériau sur un autre matériau, l'un ou l'autre matériau étant notamment un métal, un plastique, du bois ou un matériau composite. On peut donc utiliser la composition dans l'une ou l'autre des applications suivantes : adhésion métal / métal, métal / composite, métal / plastique, métal / bois, bois / plastique, bois / composite, bois / bois, plastique / composite, plastique / plastique ou composite / composite.

La composition selon l'invention est ainsi particulièrement intéressante lorsqu'il convient de coller un matériau sur un matériau composite.

Les adhésifs structuraux méthacrylates souples à hautes performances mécaniques obtenus avec la composition selon l'invention sont résilients, résistent aux chocs et aux vibrations. Ils permettent de réaliser des assemblages par collage entre matériaux d'une même nature chimique ou différents par exemple : bétons, bois, céramiques, verres, ferrites, aluminium, aluminium anodisé, acier, acier galvanisé, acier inoxydable, métaux peints, acier, cuivre, zinc, abs, pvc, polyester, acryliques, polystyrène, Gel Coat polyester ou époxydes, matériaux composites, composites renforcés de fibres de verre, stratifiés, nids d'abeilles, et de tout matériau peint ou laqué.

Ils peuvent également combler des jeux importants entre les substrats, d'épaisseurs, de rugosités, de planéités différentes et variables avec une meilleure répartition des contraintes. Cette propriété est augmentée du fait de la rhéologie de la composition selon l'invention.

En utilisant un principe dérivé du principe des cônes d'Abrams, avec des cônes de 4,5 cm de diamètre, on a mesuré la fermeté de compositions selon l'invention. La méthode des cônes d'Abrams est notamment utilisée dans le domaine des ciments et mortiers, et permet de mesurer l'affaissement d'un cône de béton sous l'effet de son propre poids. Plus cet affaissement est grand et plus le béton est réputé fluide.

On a observé que l'affaissement des formulations selon l'invention est faible, c'est-à-dire qu'elle se maintiennent sous l'effet de leur propre poids. Ainsi, on peut considérer que les adhésifs obtenus à partir des compositions selon l'invention se comportent comme des mortiers, car ils s'avèrent consistants et pâteux. Du fait de leur nature pâteuse, on peut utiliser ces adhésifs comme des ciments ou mortiers afin de combler le jeu entre deux pièces, et de permettre l'adhésion entre deux pièces qui ne sont pas en contact direct, tout en gardant les propriétés des adhésifs thermoplastiques, c'est à dire notamment l'élasticité que n'a pas un mortier.

Ceci permet donc de réaliser des assemblages de grandes surfaces avec des jeux particulièrement élevés qui se maintiennent sans s'affaisser après l'assemblage avec des temps de prise plus ou moins long allant de quelques minutes à plus d'une heure. Ceci est notamment très intéressant dans la construction nautique, avec la réalisation d'assemblage de pont sur coque ou de joints congés pour le collage de cloisons.

Les compositions selon l'invention possèdent également un faible retrait, en particulier après assemblage d'un plastique thermoplastique sur un composite polyester. Le retrait observé avec les compositions selon l'invention est ainsi inférieur à 2% alors que les compositions de l'art antérieur présentent généralement un retrait compris entre 5 et 7%.

La consistance des compositions selon l'invention, conjuguée à leur faible retrait permet donc de les utiliser aisément pour obtenir des joints de colle particulièrement importants.

Par ailleurs, la souplesse de cette composition permet ainsi de reprendre les efforts des dilatations différentielles entre les substrats sur des longueurs importantes de plusieurs mètres, en diminuant et en annulant les défauts de géométrie (angle, rugosité, planéité).

De plus, les compositions selon l'invention présentent une faible exothermie lors de la polymérisation. Ceci est également favorable car une trop forte exothermie, notamment lors d'un collage d'un thermoplastique ABS (utilisable comme renfort) sur une carrosserie composite à base de polyester peut « stresser » l'ABS et créer des contraintes de collage sur le composite qui sont visibles après le cycle de peinture.

Les applications et secteurs d'activités concernés comprennent :
Collage de renforts, rails, charpentes, poutres, raidisseurs, panneaux, cloisons, fixations, supports, éléments de carrosserie, équerres de renfort, inserts, éléments cylindriques et coniques, charnières, cadres, etc. Collage avec reprise de stratification sur cloison, collage avec remplissage nécessitant une tenue mécanique élevée.

Notamment collage de tout élément de structure ou mécanique collés dans la construction navale, automobile, ferroviaire (et infrastructures), aéronautique, aérospatiale, d'équipements électroniques, électro-mécaniques, d'électroménagers, de structures militaires, d'enseignes, de panneaux de signalisation (et publicitaires), de mobiliers urbains, de menuiseries extérieures (fenêtres, baies vitrées, portes-fenêtres, portes d'entrée et de garages), d'éoliennes, containers, d'ouvrages d'art et d'infrastructure (ponts suspendus, plates-formes pétrolières offshore, aérogares, etc.), construction et fixation et de façade d'immeuble et de panneaux solaires.

Les enseignements apportés par la présente invention permettent à un homme du métier de jouer sur la viscosité de la composition selon l'invention, en maintenant les performances mécaniques telles que l'allongement à la rupture (supérieur à 80 %) ou la résistance au cisaillement.

A titre d'exemple, les deux types de compositions suivantes entrent dans le champ de l'invention, les proportions relatives des différents composants pouvant être ajustées par l'homme du métier.

Ainsi, on peut ainsi mettre en œuvre la formulation de composition suivante :
(a) monomère ester méthacrylate (MAM) : supérieur ou égal à 40%
(b) copolymère bloc élastomérique (seul ou en mélange) : entre 15 et 21 %
(c) un élastomère (polybutadiène fonctionnalisé (VTB)) : entre 8 et 10 %
(d) des particules « core shell » : entre 2 et 15 %

On ajoute aussi des monomères (e) dans une quantité comprise entre 5 et 10%, du Disparlon entre 0 et 3%, des monomères acides entre 1 et 4%, et du Genorad entre 0 et 3%.

On peut aussi utiliser une formulation de composition :
(a) monomère ester méthacrylate (MAM) : supérieur ou égal à 40%
(b) copolymère bloc élastomérique (seul ou en mélange) : entre 2 et 15 %
(c) un polybutadiène fonctionnalisé (VTB) entre 8 et 10 %, éventuellement mélangé avec du polychloroprène entre 3 et 10 %, ou du copolymère butadiène - acrylonitrile.
(d) des particules « core shell » : entre 10 et 25 %

On ajoute aussi des monomères (e) dans une quantité comprise entre 5 et 10%, du Disparlon entre 0 et 3%, des monomères acides entre 1 et 4%, et du Genorad entre 0 et 3%.

### Exemples

Les exemples ci-dessous illustrent l'invention sans en restreindre la portée.

### Exemple 1 : matières premières utilisées et méthodologie

On utilise les éléments suivants :
monomère ester méthacrylate (a) : méthacrylate de méthyle (MAM)
monomère ester acrylate (e) : méthacrylate de lauryle (LauMA) et/ou acrylate de 2-éthylhexyle (AE2H)
copolymère SIS (b) : Kraton D1160 (Kraton Polymers)
copolymère SBS (b) : Kraton D1102 (Kraton Polymers) ou
copolymère SIBS (b) : Kraton MD6455 (Kraton Polymers)
élastomère liquide fonctionnalisé (c) : Hycar® VTB 2000x168 (Noveon, USA)
(polybutadiène fonctionnalisé)
particules polymériques élastomériques (d) : Clearstrength C301 (Arkema), Cleartrength C303H, Durastrength D340 (Arkema), Paraloid BTA 753 (Rohm et Haas)
monomère acide : acide méthacrylique (AMA)
promoteur d'adhésion : méthacrylate phosphate Genorad 40 (Rahn AG)
accélérateurs de polymérisation : diméthyl-para-toluidine (DMPT) et / ou dihydroxyéthyle-para-toluidine (PTE)
agent de rhéologie : Disparlon 6200, Disparlon 6500 (Kusumoto Chemicals)
catalyseur : peroxyde de benzoyle à 20 % ADERIS 1003 (Jacret, France)
élastomère nitrile/butadiène : Chemigum P83 (Eliokem, France)

On effectue les tests selon les protocoles suivants :
On utilise la norme ISO 527 pour effectuer les tests permettant de mesurer la résistance en traction R_{T}, l'allongement à la rupture AR, le module d'élasticité (Module de Young, MY).

L'allongement est observé selon une méthode bien connue de l'homme du métier décrite notamment par la norme ISO 527, la vitesse d'étirement de l'adhésif étant constante et de 50 mm / mn.

La résistance au cisaillement par traction (R_{C}) est mesurée selon la norme ISO 4587. Brièvement, on utilise des éprouvettes en aluminium 2024T3 de dimensions 100 x 25 x 1,6 mm (L x l x e). Deux éprouvettes sont collées l'une sur l'autre, la zone de recouvrement étant de 25 x 12 mm (300 mm²), avec une épaisseur du joint de colle d'environ 200 à 400 µm. On mesure ensuite la force nécessaire pour rompre l'adhésion en tirant sur les deux éprouvettes.

La résistance au pelage en T (R_{P}) est évaluée selon la norme ISO 14173. On utilise des éprouvettes en aluminium 100 x 25 x 1,5 mm ou en acier galvanisé 100 x 25 x 0,8 mm que l'on colle avec un recouvrement de 75 x 25 mm et un joint de colle épais d'environ 500 µm.

La viscosité des adhésifs est évalué par l'épaisseur d'adhésif qu'il est possible d'appliquer sur une surface verticale sans observer de glissement vers le bas. Adhésion sur matériau composite : Le test de collage a été effectué par adhésion d'acier galvanisé sur gelcoat polyester. La qualité d'adhésion est notée selon la convention suivante :
++ = très bonne ; + = bonne ; - = mauvaise

### Résultats

On teste des échantillons contenant un mélange de deux copolymères bloc élastomériques (b), un élastomère (c) avec présence ou absence des particules (d).

| **Echantillon** | **1** | **2** | **3** | **6** | **5** | **4** |
|---|---|---|---|---|---|---|
| MAM | 50,2 | 46.2 | 51 | 46 | 54 | 50 |
| Kraton D1160 | 16 | 16 | 16 | 15 | 16 | 16 |
| Kraton MD6455 | 5 | 5 | 5 | 5 | 5 | 5 |
| VTB 2000x168 | 10 | 10 | 10 | 10 | 10 | 10 |
| C301 | - | 5 | - | 5 | - | 4 |
| AE2H | 8,8 | 8,8 | 8 | 9 | 5 | 5 |
| AMA | 5 | 4 | 4 | 4 | 4 | 4 |
| Genorad 40 | 3 | 3 | 3 | 3 | 3 | 3 |
| DMPT | 1 | 1 | 1 | 1 | 1 | 1 |
| Disparlon 6500 | 1 | 1 | 2 | 2 | 2 | 2 |
| Total (poids) | 100 | 100 | 100 | 100 | 100 | 100 |

Les résultats obtenus sont les suivants :

| **Echantillon** | **1** | **2** | **3** | **6** | **5** | **4** |
|---|---|---|---|---|---|---|
| R_{C} (MPa) Aluminium | 20,5 | 18,7 | 19,2 | 18,3 | n.e. | 20,5 |
| R_{P} (N/mm) Aluminium | 17,3 | 15,4 | 14,3 | 13 | n.e. | 15,5 |
| R_{P} (N/mm) acier galvanisé | 17,5 | 16,7 | 19,6 | 15 | n.e. | 15,3 |
| R_{T} (MPa) | 9,6 | 10,1 | 9,8 | 9,6 | 11,1 | 10,5 |
| AR (%) | 251 | 189,8 | 156,3 | 202 | 84,6 | 151,1 |
| MY (MPa) | 95,7 | 118,5 | 150 | 104,6 | 201,8 | 164,4 |
| Epaisseur (mm) | 1-2 | 3-5 | 2-4 | 6-9 | 2-4 | 8-11 |
| Adhésion gelcoat | + | ++ | n.e. | ++ | ++ | + |

| | | | | | | |
|---|---|---|---|---|---|---|
| n.e. : non effectué | | | | | | |

Ces résultats démontrent que la présence de particules élastomériques (d) permet d'augmenter la viscosité d'adhésifs (mesurée par l'épaisseur de la couche pouvant être appliquée sans coulage) sans diminution notable de la résistance au cisaillement ou de l'allongement à la rupture.

Des résultats similaires sont observés lorsque l'on mélange d'autres copolymères blocs (SIS + SBS).

On teste également des composés, contenant un seul copolymère bloc (b) :

| **Echantillon** | **8** | **9** | **10** | **11** | **12** | **13** | **14** |
|---|---|---|---|---|---|---|---|
| MAM | 54 | 50 | 50 | 54 | 50 | 54 | 50 |
| Kraton D1102 | - | - | - | 21 | 21 | - | - |
| Kraton D1160 | - | - | - | - | - | 21 | 21 |
| Kraton MD6455 | 21 | 21 | 21 | - | - | - | - |
| VTB 2000x168 | 10 | 10 | 10 | 10 | 10 | 10 | 10 |
| C301 | - | 5 | 4 | - | 4 | - | 4 |
| AE2H | 5 | 5 | 5 | 5 | 5 | 5 | 5 |
| AMA | 4 | 4 | 4 | 5 | 4 | 5 | 4 |
| Genorad 40 | 3 | 3 | 3 | 3 | 3 | 3 | 3 |
| DMPT | 1 | 1 | 1 | 1 | 1 | 1 | 1 |
| Disparlon 6500 | 2 | 1 | 2 | 1 | 2 | 1 | 2 |
| Total (poids) | 100 | 100 | 100 | 100 | 100 | 100 | 100 |

Les résultats obtenus sont les suivants :

| **Echantillon** | **8** | **9** | **10** | **11** | **12** | **13** | **14** |
|---|---|---|---|---|---|---|---|
| R_{C} (MPa) aluminium | 22 | 20 | 22,2 | 22 | 21,4 | 21,1 | n.e. |
| R_{P} (N/mm) aluminium | 16,7 | 13 | 16,6 | 12,4 | 14,9 | 20,5 | n.e. |
| R_{P} (N/mm) acier galvanisé | 13,1 | 13,5 | 16,8 | 8,9 | 18,7 | 17,2 | n.e. |
| R_{T} (MPa) | 10,5 | 10,9 | 11 | 12,4 | 12,4 | 9,4 | 11,5 |
| AR (%) | 86,5 | 128,8 | 140,4 | 43,2 | 146,3 | 50,2 | 87,3 |
| MY (MPa) | 178,6 | 175,6 | 177,8 | 268 | 228,3 | 173,8 | 210,2 |
| Epaisseur (mm) | 2-4 | 3-5 | 6-9 | 1-2 | 6-9 | 1-2 | 6-9 |
| Adhésion gelcoat | ++ | ++ | ++ | + | ++ | + | n.e. |

Il apparaît clairement que la présence conjointe des éléments (b), (c), (d) permet de maintenir une excellente résistance au cisaillement par traction, d'améliorer l'allongement à la rupture (élasticité), et d'augmenter la viscosité. On note également que l'on maintient les résultats observés pour la résistance au pelage ou à la traction.

On teste également différentes particules élastomériques « core-shell » :

| **Echantillon** | **15** | **16** | **17** |
|---|---|---|---|
| MAM | 46 | 46 | 45,1 |
| Kraton MD6455 | 21 | 21 | 18,9 |
| Kraton D1160 | - | - | - |
| VTB 2000x168 | 10 | 10 | 9 |
| Néoprène AD10 | - | - | - |
| C303H | - | 10 | - |
| D340 | 10 | - | 14 |
| BTA 753 | - | - | - |
| AE2H | 5 | 5 | 5 |
| LauMA | - | - | - |
| AMA | 4 | 4 | 4 |
| Genorad 40 | 3 | 3 | 3 |
| DMPT | 1 | 1 | 1 |
| Disparlon 6500 | 0 | 0 | 0 |
| Total (poids) | 100 | 100 | 100 |

Les résultats obtenus sont les suivants :

| **Echantillon** | **15** | **16** | **17** |
|---|---|---|---|
| R_{C} (MPa) aluminium | 22,1 | 23,5 | 20,0 |
| R_{T} (MPa) | 9,7 | 10 | 9,9 |
| AR (%) | 127,9 | 97,0 | 97,2 |
| MY (MPa) | 200,1 | 165,6 | 170,2 |
| Epaisseur (mm) | 8-11 | 14-18 | 18-20 |
| Adhésion gelcoat | ++ | ++ | ++ |

D'autres formulations sont également testées, contenant un mélange de copolymères blocs (b).

| **Echantillon** | **19** | **20** | **21** | **22** | **23** | **24** | **25** |
|---|---|---|---|---|---|---|---|
| MAM | 53,72 | 55 | 43,3 | 40,3 | 40,3 | 44,3 | 44,3 |
| Kraton D1160 | - | 5 | 15 | 15 | 15 | 16 | 16 |
| Kraton MD6455 | 7,14 | 15 | 5 | 5 | 5 | 5 | 5 |
| VTB 2000x168 | 8,2 | 10 | 10 | 10 | 10 | 10 | 10 |
| AE2H | 4,1 | - | 5 | 5 | 5 | 5 | 5 |
| LauMA | 5,1 | 1 | 5 | 5 | 5 | 5 | 5 |
| C303H | 15.3 | 10 | - | 15 | - | - | - |
| D340 | - | - | 15 | - | - | 10 | - |
| BTA 753 | - | - | - | - | 15 | - | - |
| AMA | 2 | 1 | 1 | 1 | 1 | 1 | 1 |
| PTE | - | - | 0,5 | 0,5 | 0,5 | 0,5 | 0,5 |
| DMPT | 0,3 | 1 | 0,2 | 0,2 | 0,2 | 0,2 | 0,2 |
| Néoprène AD10 | 4,14 | - | - | - | - | - | - |
| Chemigum P83 | - | - | - | - | - | - | 10 |
| Disparlon 6500 | - | 2 | - | 3 | 3 | 3 | 3 |
| Total (poids) | 100 | 100 | 100 | 100 | 100 | 100 | 100 |

On obtient les résultats suivants :

| **Echantillon** | **19** | **20** | **21** | **22** | **23** | **24** | **25** |
|---|---|---|---|---|---|---|---|
| R_{T} (MPa) | 7,2 | 5,5 | 6,4 | 7 | 6,1 | 6,2 | 3,2 |
| AR (%) | 132,8 | 103,5 | 180,2 | 291 | 210,3 | 199,8 | 130,3 |
| MY (MPa) | 108,1 | 54,3 | 111,6 | 102,3 | 78,9 | 116,9 | 35,5 |
| Epaisseur (mm) | 15-20 | 12-16 | 20-25 | 20-25 | 20-25 | 20-25 | 10-15 |

Ces résultats montrent que l'utilisation d'un NBR n'est pas aussi efficace que les particules (d) utilisées dans le cadre de l'invention.

L'ensemble de ces résultats démontre que le mélange des éléments (a), (b), (c), (d) permet d'obtenir un adhésif présentant une rhéologie importante en maintenant un bon allongement à la rupture.

## Revendications

1. Composition utilisable dans un adhésif structural, comprenant :
(a) au moins un monomère méthacrylate
(b) au moins un copolymère bloc élastomérique contenant du styrène et au moins un second monomère
(c) au moins un élastomère choisi parmi le polybutadiène, le polyisoprène et le polychloroprène
(d) des particules formées d'une coquille thermoplastique et d'un cœur élastomérique.

2. Composition selon la revendication 1, **caractérisée en ce que** ledit élastomère (c) est fonctionnalisé.

3. Composition selon la revendication 1 ou 2, **caractérisée en ce que** ledit second monomère du copolymère bloc élastomérique (b) est choisi parmi l'isoprène, le butadiène et l'éthylène.

4. Composition selon la revendication 3, **caractérisée en ce que** ledit copolymère bloc élastomérique est choisi parmi les copolymères styrène - isoprène - styrène (SIS), styrène - butadiène - styrène (SBS), styrène - isoprène - butadiène - styrène (SIBS), et les mélanges de ceux-ci.

5. Composition selon l'une des revendications 1 à 4, **caractérisée en ce qu'**elle comprend entre 5 et 30 % en poids dudit copolymère bloc élastomérique (b), ou du mélange de copolymères bloc élastomériques (b).

6. Composition selon l'une des revendications 1 à 5, **caractérisée en ce que** ledit élastomère (c) est liquide et est un polybutadiène fonctionnalisé ou non.

7. Composition selon l'une des revendications 1 à 6, **caractérisée en ce qu'**elle comprend entre 6 et 15 % en poids dudit élastomère (c).

8. Composition selon l'une des revendications 1 à 7, **caractérisée en ce que** lesdites particules (d) sont choisies parmi les particules acrylonitrile-butadiène-styrène, méthacrylate-butadiène-styrène, méthacrylate- acrylonitrile-butadiène-styrène, méthacrylate-acrylonitrile et les mélanges de celles-ci.

9. Composition selon l'une des revendications 1 à 8, **caractérisée en ce qu'**elle comprend entre 2 et 20 % en poids desdites particules (d).

10. Composition selon l'une des revendications 1 à 9, **caractérisée en ce qu'**elle comprend également au moins un monomère ester acrylate dans lequel la partie alcool présente au moins une chaîne linéaire d'au moins 6 atomes de carbones (e).

11. Composition selon la revendication 10, **caractérisée en ce que** ledit un monomère ester acrylique (e) est un monomère méthacrylate ou acrylate.

12. Composition selon l'une des revendications 10 ou 11, **caractérisée en ce qu'**elle contient un mélange de deux monomères acrylate (e).

13. Composition selon l'une des revendications 10 à 12, **caractérisée en ce qu'**elle comprend moins de 10 % en poids de monomère acrylate (e).

14. Composition selon l'une des revendications 1 à 13, **caractérisée en ce qu'**elle contient également du polychloroprène.

15. Composition selon l'une des revendications 1 à 14, **caractérisée en ce qu'**elle contient également au moins un composé supplémentaire choisi parmi un accélérateur de polymérisation, un agent de rhéologie, un promoteur d'adhésion, un monomère acide.

16. Utilisation combinée (a) d'un monomère méthacrylate, (b) d'un copolymère bloc élastomérique choisi parmi un copolymère bloc contenant du styrène et de l'isoprène et un copolymère bloc élastomérique contenant du styrène et un second monomère, (c) d'un élastomère choisi parmi le polybutadiène, le polyisoprène et le polychloroprène et (d) de particules formées d'une coquille thermoplastique et d'un cœur élastomérique, pour la préparation d'une composition utilisable en tant qu'adhésif structural présentant un allongement à la rupture supérieur ou égal à 80 % et une rhéologie permettant d'appliquer une épaisseur d'au moins 3 à 5 mm de ladite composition sur une surface verticale sans qu'elle ne coule sous l'effet de la gravité.

17. Utilisation d'une composition selon l'une des revendications 1 à 15 pour permettre l'adhésion d'un matériau sur un autre matériau.

## Patentansprüche

1. Zusammensetzung zur Verwendung in einem Strukturklebstoff, umfassend:
(a) mindestens ein Methacrylat-Monomer
(b) mindestens ein Elastomer-Blockcopolymer, das Styrol und mindestens ein zweites Monomer enthält
(c) mindestens ein Elastomer, ausgewählt aus Polybutadien, Polyisopren und Polychloropren, und
(d) Partikel, die aus einer thermoplastischen Schale und einem elastomeren Kern gebildet sind.

2. Zusammensetzung nach Anspruch 1, **dadurch gekennzeichnet, dass** das Elastomer (c) funktionalisiert ist.

3. Zusammensetzung nach Anspruch 1 oder 2, **dadurch gekennzeichnet, dass** das zweite Monomer des Elastomer-Blockcopolymers (b) aus Isopren, Butadien und Ethylen ausgewählt ist.

4. Zusammensetzung nach Anspruch 3, **dadurch gekennzeichnet, dass** das Elastomer-Blockcopolymer aus Styrol-Isopren-Styrol(SIS)-, Styrol-Butadien-Styrol(SBS)-, Styrol-Isopren-Butadien-Styrol(SIBS)-Copolymeren und deren Gemischen ausgewählt ist.

5. Zusammensetzung nach einem der Ansprüche 1 bis 4, **dadurch gekennzeichnet, dass** sie zwischen 5 und 30 Gew.-% des Elastomer-Blockcopolymers (b) oder des Gemischs von Elastomer-Blockcopolymeren (b) enthält.

6. Zusammensetzung nach einem der Ansprüche 1 bis 5, **dadurch gekennzeichnet, dass** das Elastomer (c) flüssig ist und ein funktionalisiertes oder nicht funktionalisiertes Polybutadien ist.

7. Zusammensetzung nach einem der Ansprüche 1 bis 6, **dadurch gekennzeichnet, dass** sie zwischen 6 und 15 Gew.-% des Elastomers (c) umfasst.

8. Zusammensetzung nach einem der Ansprüche 1 bis 7, **dadurch gekennzeichnet, dass** die Partikel (d) aus Acrylnitril-Butadien-Styrol-, Methacrylat-Butadien-Styrol-, Methacrylat-Acrylnitril-Butadien-Styrol-, Methacrylat-Acrylnitril-Partikeln und deren Gemischen ausgewählt sind.

9. Zusammensetzung nach einem der Ansprüche 1 bis 8, **dadurch gekennzeichnet, dass** sie zwischen 2 und 20 Gew.-% der Partikel (d) umfasst.

10. Zusammensetzung nach einem der Ansprüche 1 bis 9, **dadurch gekennzeichnet, dass** sie ferner mindestens ein Acrylatester-Monomer, wobei der Alkoholanteil mindestens eine gerade Kette mit mindestens 6 Kohlenstoffatomen aufweist, (e) umfasst.

11. Zusammensetzung nach Anspruch 10, **dadurch gekennzeichnet, dass** das eine Acrylester-Monomer (e) ein Methacrylat- oder Acrylat-Monomer ist.

12. Zusammensetzung nach einem der Ansprüche 10 oder 11, **dadurch gekennzeichnet, dass** sie ein Gemisch von zwei Acrylat-Monomeren (e) enthält.

13. Zusammensetzung nach einem der Ansprüche 10 bis 12, **dadurch gekennzeichnet, dass** sie weniger als 10 Gew.-% an Acrylat-Monomer (e) enthält.

14. Zusammensetzung nach einem der Ansprüche 1 bis 13, **dadurch gekennzeichnet, dass** sie ferner Polychloropren enthält.

15. Zusammensetzung nach einem der Ansprüche 1 bis 14, **dadurch gekennzeichnet, dass** sie ferner mindestens eine zusätzliche Verbindung, ausgewählt aus einem Polymerisationsbeschleuniger, einem Rheologiemittel, einem Haftverbesserer, einem Säuremonomer, enthält.

16. Kombinierte Verwendung (a) eines MethacrylatMonomers, (b) eines Elastomer-Blockcopolymers, ausgewählt aus einem Blockcopolymer, das Styrol und Isopren enthält, und einem Elastomer-Blockcopolymer, das Styrol und ein zweites Monomer enthält, (c) eines Elastomers, ausgewählt aus Polybutadien, Polyisopren und Polychloropren, und (d) von Partikeln, die aus einer thermoplastischen Schale und einem elastomeren Kern gebildet sind, zur Herstellung einer Zusammensetzung zur Verwendung als Strukturklebstoff mit einer Bruchdehnung von mehr als oder gleich 80% und einer Rheologie, die es gestattet, eine Dicke von mindestens 3 bis 5 mm der Zusammensetzung auf eine vertikale Oberfläche aufzutragen, ohne dass sie unter dem Einfluss der Schwerkraft fließt.

17. Verwendung einer Zusammensetzung nach einem der Ansprüche 1 bis 15, um die Haftung eines Materials auf einem anderen Material zu ermöglichen.

## Claims

1. A composition that can be used in a structural adhesive, comprising:
(a) at least one methacrylate monomer;
(b) at least one elastomeric block copolymer containing styrene and at least one second monomer;
(c) at least one elastomer chosen from polybutadiene, le polyisoprene and polychloroprene; and
(d) particles formed from a thermoplastic shell and an elastomeric core.

2. The composition as claimed in claim 1, **characterized in that** said elastomer (c) is functionalized.

3. The composition as claimed in claim 1 or 2, **characterized in that** said second monomer of the elastomeric block copolymer (b) is chosen from isoprene, butadiene and ethylene.

4. The composition as claimed in claim 3, **characterized in that** said elastomeric block copolymer is chosen from styrene-isoprene-styrene (SIS), styrenebutadiene-styrene (SBS) and styrene-isoprene-butadiene-styrene (SIBS) copolymers and blends thereof.

5. The composition as claimed in one of claims 1 to 4, **characterized in that** it comprises between 5 and 30% by weight of said elastomeric block copolymer (b) or of the blend of elastomeric block copolymers (b).

6. The composition as claimed in one of claims 1 to 5, **characterized in that** said elastomer (c) is liquid and is a polybutadiene, whether functionalized or not.

7. The composition as claimed in one of claims 1 to 6, **characterized in that** it comprises between 6 and 15% of said elastomer (c) by weight.

8. The composition as claimed in one of claims 1 to 7, **characterized in that** said particles (d) are chosen from acrylonitrile-butadiene-styrene, methacrylate-butadiene-styrene, methacrylate-acrylonitrile-butadiene -styrene and methacrylate-acrylonitrile particles and the mixtures thereof.

9. The composition as claimed in one of claims 1 to 8, **characterized in that** it comprises between 2 and 20% by weight of said particles (d).

10. The composition as claimed in one of claims 1 to 9, **characterized in that** it also comprises at least one acrylate ester monomer in which the alcohol part has at least one linear chain of at least 6 carbon atoms (e).

11. The composition as claimed in claim 10, **characterized in that** said one acrylic ester monomer (e) is a methacrylate or acrylate monomer.

12. The composition as claimed in either of claims 10 and 11, **characterized in that** it contains a mixture of two acrylate monomers (e).

13. The composition as claimed in one of claims 10 to 12, **characterized in that** it comprises less than 10% by weight of acrylate monomer (e).

14. The composition as claimed in one of claims 1 to 13, **characterized in that** it also contains polychloroprene.

15. The composition as claimed in one of claims 1 to 14, **characterized in that** it also contains at least one additional compound chosen from a curing accelerator, a rheology modifier, an adhesion promoter and an acid monomer.

16. The combined use of (a) a methacrylate monomer, (b) an elastomeric block copolymer chosen from a block copolymer containing styrene and isoprene and an elastomeric block copolymer containing styrene and a second monomer, (c) an elastomer selected from polybutadiene, polyisoprene and polychloroprene and (d) particles formed from a thermoplastic shell and an elastomeric core, for the preparation of a composition that can be used as a structural adhesive having an elongation at break equal to or greater than 80% and a rheology enabling a thickness of at least 3 to 5 mm of said composition to be applied to a vertical surface without it flowing under the effect of gravity

17. The use of a composition as claimed in one of claims 1 to 15 for the adhesion of one material to another material.
